# EUROPEAN PATENT SPECIFICATION

(11) **EP 3 776 151 B1**
(45) Date of publication and mention of the grant of the patent: **30.07.2025**
(21) Application number: 18726970.9
(22) Date of filing: 22.05.2018
(51) Int. Cl.: G06F 3/043, G06F 3/16

(54) **ELECTRONIC DEVICE WITH FORCE SENSITIVE DISPLAY**
ELEKTRONISCHE VORRICHTUNG MIT KRAFTEMPFINDLICHER ANZEIGE
DISPOSITIF ÉLECTRONIQUE AVEC ÉCRAN SENSIBLE À LA FORCE

(43) Date of publication of application: 17.02.2021
(73) Proprietor: HUAWEI TECHNOLOGIES CO., LTD., Shenzhen, Guangdong 518129 (CN)
(72) Inventor: MAENPAA, Ossi, 16440 Kista (SE)
(74) Representative: Grünecker Patent- und Rechtsanwälte PartG mbB
(86) International application number: PCT/EP2018/063411
(87) International publication number: WO 2019/223856

(56) References cited:
- WO-A1-00/30025
- US-A1- 2015 009 185

## Description

### TECHNICAL FIELD

The invention relates to an electronic device having a force sensitive display.

### BACKGROUND

In existing electronic devices with a display, the display can be of a touch sensitive type to allow input via a pressing force on the display. The existing touch sensitive displays have components formed in the display to allow the electronic device to sense a pressing force on the display. A drawback of existing force-sensing technologies on displays is an increased product cost. Also, the components included in existing force sensitive displays cause the display module to be thicker as additional force sensing layer needs to be implemented in the display.

Hence, there is a need for an improved electronic device with a force sensitive display.

US 2015/0009185 discloses a touch screen system comprising acoustic transmitters and receivers receiving acoustic waves transmitted by the transmitters. A touch pressure of a user's touch is determined by the determination of the attenuation of the acoustic waves.

WO 00/30025 discloses a ontroller including an adjustable gain amplifier and a control circuit. The adjustable gain amplifier has an input, an output, and a gain control terminal, and receives a first signal representative of an acoustic signal on a touch screen on the input terminal and delivers an amplified version of the first signal on the output terminal. The gain control terminal receives a control signal that varies the gain of the amplifier. The control circuit includes an analog to digital converter that receives a portion of the amplified first signal and outputs a digital signal representative thereof. The control circuit includes a processing element that is electrically coupled to the ADC and receives the digital signal. The processing element compares the digital signal to a preslected value and determines the difference if any between the digital signal and the preselected value. If the difference exceeds a preselected limit, the control circuit delivers a control signal to the control input of the amplifier.

### SUMMARY

It is an object of the present invention to provide an improved electronic device having a force sensitive display.

It is provided an electronic device comprising:
- a display working as a membrane;
- an audio actuator connected to the display and wherein the audio actuator is an electro-mechanical transducer configured to transform an electrical alternating current audio signal to mechanical vibration and a mechanical force applied to the display to an electrical signal, wherein the audio actuator (104) is configured to generate a voltage signal from a pressing force on the display;
- an audio signal generator connected to the audio actuator, wherein the audio actuator is configured to make the display vibrate in accordance with an audio signal generated by the audio signal generator,
- a lowpass filter configured to filter the voltage signal to generate an output signal by filtering out the audio signal, and
- a force detection unit connected to the lowpass filter, wherein the force detection unit is configured to determine if a is force applied to the display based on the output signal from the lowpass filter; and wherein
the lowpass filter is configured to have a passband that is below any frequency generated by the audio generator such that no signals generated by the audio signal generator are comprised in the output signal.

The low-passed signal can be used to determine a pressing force on the display and to thereby implement a force sensitive functionality in the electronic device without the need for any additional electronic components such as the use of force sensitive displays. Instead the audio actuator can be used to generate a voltage signal that can be used to sense a pressure on the screen after low-pass filtering of the voltage signal. Hereby there is no need for a pressure sensitive display with force sensing layer(s) integrated in the display.

In accordance with a second implementation, the electronic device is provided with a frame and a suspension member. The display is then attached to the frame via the suspension member. Hereby a suspended display can be achieved. This can make the voltage signal generated by the audio actuator less sensitive to where on the display the pressing force is applied. Thus, in particular if the display is relatively small, such on a smart phone, there can be large differences in the signal generated by the audio actuator depending on if a user applies a force close to the rim of the display or if the force is applied in the middle of the display. This problem can be alleviated by suspending the display in a frame whereby there can be a more linear movement of the display in response to a pressing force on the display.

The detected low pass filtered signal can then be used as an input signal to control the electronic device or to read input from a user.

In accordance with another implementation, the force detection unit is further configured to determine a time during which a force is applied to the display based on the output signal from the lowpass filter. Hereby the electronic device can be made to distinguish between different pressing force inputs based on for how long the pressing force is applied to the screen. Hereby a user is enabled to input different control commands by varying the time during which a pressing force is applied to the display.

In accordance with another implementation, the force detection unit is further configured to determine a magnitude of a force applied to the display based on the output signal from the lowpass filter. Hereby the electronic device can be made to distinguish between different pressing force inputs based on the magnitude of the pressing force applied to the screen.

Hereby a user is enabled to input different control commands by varying the magnitude at which a pressing force is applied to the display.

Since the lowpass filter is configured to have a passband that is below any frequency generated by the audio generator, it can be ensured that only signals resulting from a pressing force are output from the lowpass filter. Thus, there is no risk that signals the audio generator generates will be used as a signal indicating a pressing force of the display.

In accordance with another implementation, the electronic device can further comprise a tactile feedback actuator located behind the display. Hereby it is made possible to provide tactile feedback to a user of the electronic device. For example, when input of commands or text is made via the display the user can get a feedback from the touch sensitive display to enhance correct input by providing a feedback that makes it easier to for example enter double commands or no command at all.

In accordance with another implementation, at least two audio actuators are provided. By providing multiple audio actuators, it is made possible to use the different output signals from the different audio actuators to determine where on the display the pressing force is applied. Depending on the number of audio actuators provided it can become possible to determine the location on the pressing force with varying precision. Typically, the larger number of audio actuators used the higher precision in a determination on where the pressing force is applied can be achieved.

The electronic device can advantageously be a mobile phone.

The invention also extends to a method for detecting a pressing force on a display using the device above and to a computer program product for implementing the method.

### BRIEF DESCRIPTION OF THE DRAWINGS

The invention will now be described in more detail, by way of example, and with reference to the accompanying drawings, in which:
Fig. 1 shows an electronic device with a display connected to an audio actuator;
Fig. 2 shows the electronic device in a cross-sectional side view; and
Fig. 3 is a flow chart illustrating processing of a signal resulting from a pressing force on a display connected to an audio actuator.

### DETAILED DESCRIPTION

The invention will now be described in detail hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

To provide an easy to implement and cost-efficient display that is capable of providing touch-sensitive input, an audio actuator connected to the display can be used to provide a voltage signal when a force is applied to the display.

As has been realized, an audio display, i.e. a display used as an audio radiating membrane, will have some electro-mechanical transducer component behind display causing a mechanical vibration for transmitting audio via the display. The transducer also referred to audio actuator will transform an electrical alternating current, AC, audio signal to a mechanical vibration causing an acoustical audio signal transmitted via the display. Typically, such an audio actuator is formed by an electro-dynamic (coil + magnet) element or a piezo-electric element. The audio actuator also works in the other direction, i.e. it will transform a mechanical force on the display to electrical signal. By using this property of the audio actuator connected to a display working as a membrane, it is made possible to implement a touch sensitive display in an electronic device without the use of a conventional touch sensitive display having components integrated in the display. This will be particularly useful when the electronic device is provided with an audio display, in which case there is no need for any expensive additional components since the basic components are already in place for implementing the audio display. Thus, no additional force-detecting components are then required. A force applied to the display can then be detected by detecting a voltage signal generated by the audio actuator from a force applied to the display.

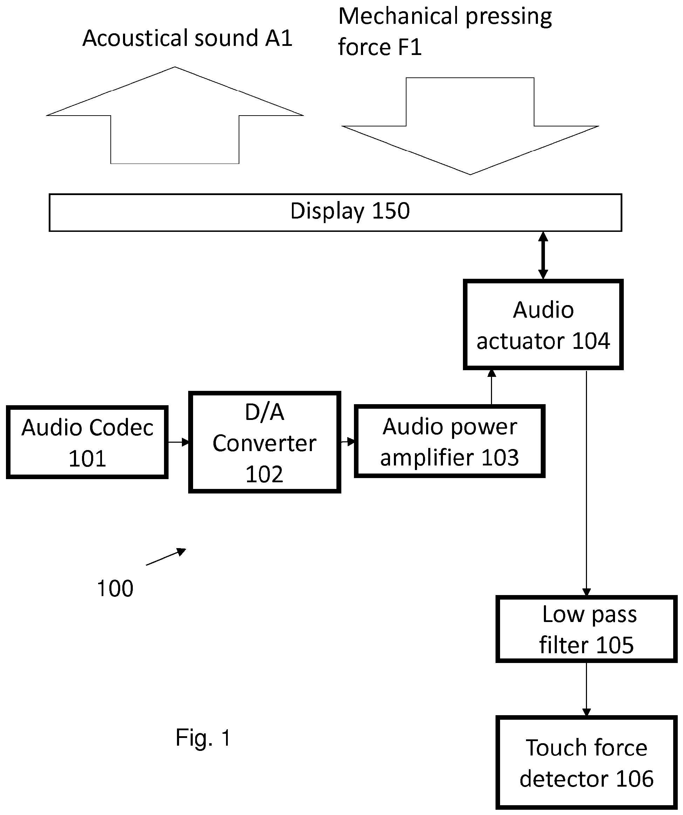

In Fig. 1, the components used in an exemplary implementation in an electronic device 100 are depicted. The electronic device 100 comprises an audio codec 101 to generate a signal to be output via an audio display of the electronic device 100. The signal generated by the audio codec 101 can be output to an audio actuator 104 via a digital to analogue D/A converter 102 and power amplifier 103. The audio actuator is connected to a display 150. The display 150 acts as a membrane that vibrates in response to the signal received from the audio actuator 104.

The audio actuator 104 is also connected to output a signal in response to a force on the display 150. The output from the audio actuator 104 is connected to an output for a signal generated by a force of the display 150. In accordance with some embodiments, the signal from the audio actuator 104 is provided to a force detection unit also referred to as detector 106. The detector 106 is configured to determine a pressing force on the display 150 based on the signal generated by the audio actuator connected to the display 150. In accordance with one embodiment, the signal from the audio actuator 104 is made to pass a low pass filter 105 before being provided to the detector 106. By letting the signal from the audio actuator pass a low pass filter 105 before reaching the detector 106, there is no risk that a signal for driving the display as an audio display will be interpreted as a pressing force on the display. However, in embodiments where there is no audio display such a low pass filter 105 typically need not be used. The low pass filter can have a pass band up to about 10 Hz or any other frequency that efficiently filters out any signals generated to drive the audio display. Other filter configurations are possible that filter out only signals generated by a pressing force such as a pass-band filter with a suitable pass band to filter out signals resulting from a pressing force on the display 150. Thus, audio actuators typically only have one pair of connectors (plus and minus). Both the audio drive signal from the amplifier 103 and the voltage signal received back from a pressing force will typically be applied together in same electrical connection lines. As audio electrical signal and the voltage signal typically are in different frequency ranges, it is possible to filter actuator electrical AC voltage to separate audio signal and voltage created by finger-pressing. Audio signal frequency range is typically about 20-20 000 Hz. As an example, a typical finger pressing time is about 0.25 seconds which equals 4 Hz frequency. The frequencies related to finger pressing may thus differ from typical audio signal frequencies by orders of magnitude, so audio signal and pressing force voltage signal can be separated from each other with a relatively simple filter structure as set out above.

When in use, the electronic device 100 can both generate an audio output A1 via the audio display 150 and also receive a mechanical pressing force input F1. Any type of audio actuator can be used, such as electro-dynamic (magnet + coil) actuator, piezo-electric actuator or electro-active polymer actuator. All are originally designed to transform electrical AC signal to mechanical vibration A1, but they also work backwards transforming mechanical finger-pressing movement F1 to electrical voltage.

The received pressing force can be processed by the electronic device to detect various input signals to the electronic device as will be described below.

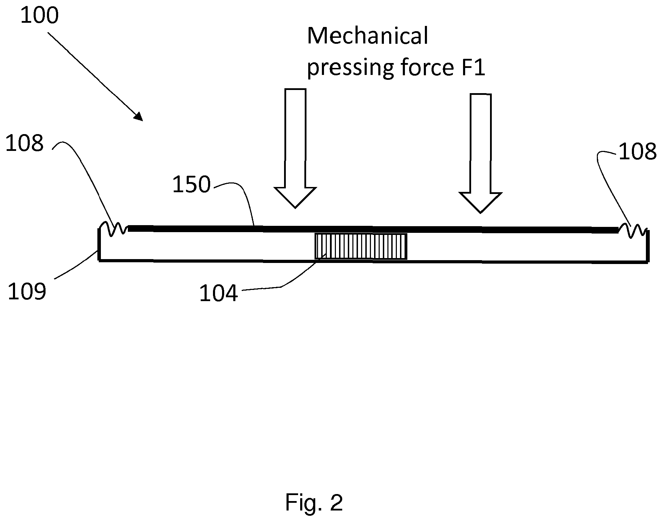

In Fig. 2 the electronic device 100 is seen in a cross-sectional view from the side. The electronic device 100 can have a frame 108. The display 150 can be attached to the frame 109. In accordance with some embodiments, the display 150 is attached to the frame via suspension members 108. Hereby a suspended display can be achieved. This can make the voltage signal generated by the audio actuator less sensitive to where on the display the pressing force is applied. For example, if the display is relatively small such on a smart phone, there can be large differences in the signal generated by the audio actuator depending on if a user applies a force close to the rim of the display or if the force is applied in the middle of the display. By suspending the display 150 in the frame 109, a more linear movement of the display in response to a pressing force can be achieved.

In accordance with some embodiments multiple, i.e. at least two, audio actuators are provided. By providing multiple audio actuators, it is made possible to use the different output signals from the different audio actuators to determine where on the display the pressing force is applied. Depending on the number of audio actuators provided it can become possible to determine the location on the pressing force with varying precision. Typically, the larger number of audio actuators used the higher precision in a determination on where the pressing force is applied can be achieved. For example, two audio actuators can be used wherein when a mobile phone is held towards the ear, only an upper-half actuator is used to create a close to ear functionality. By driving both audio actuators, a handsfree loudspeaker mode can be implemented. When having two audio actuators, can enable detection of a finger-pressing force separately for upper and lower half of display. In other implementations additional audio actuators can be provided. For example, 4 audio actuators, one of each corner of display can be used. This will also allow a more accurate force detection from a wider display area when detecting the voltage signal of several audio actuators instead of just one audio actuator.

Above, the different components such as low-pass filter and force detection unit are presented as individual blocks. In some implementations these components can be integrated in an audio actuator system configured to monitor an audio actuator displacement This monitoring of the audio actuator displacement can use the same audio display system functionality as the audio display when the audio display comprises a system for sensing actuator displacement compared to center/rest position.

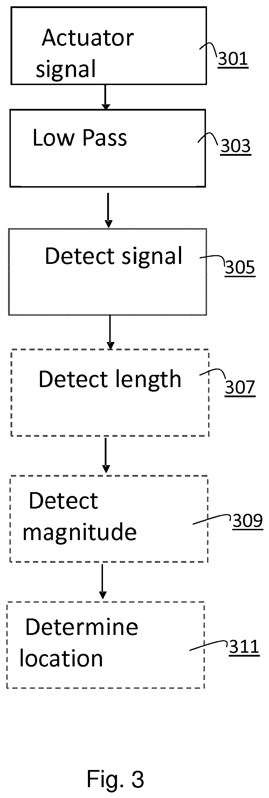

In Fig. 3, a flowchart illustrating some steps performed in an electronic device 100 when a mechanical force is applied to the display 150 connected to the audio actuator 104 is shown. First, in a step 301 a signal from the audio actuator 104 is output Next, in a step 303, the output signal is lowpass filtered in the lowpass filter 105. The signal from the lowpass filter 105 is received by a detector 106 and the signal received by the detector is used to detect a pressing force on the display in a step 305. In accordance with some embodiments, it is determined in a step 307, a time during which a force is applied to the display based on the output signal from the lowpass filter. In accordance with some embodiments, it is determined in a step 309, a magnitude of a force applied to the display based on the output signal from the lowpass filter. By determining time and magnitude of the input signal the electronic device is enabled to differentiate between different types of input from a user. In case multiple, i.e. at least two, audio actuators are provided in the electronic device, a determination of where on the display the force is applied is performed based on the output signal from the at least two audio actuators in a step 311.

The signal detected can be used in later processing for determining an input command or some other input from a user pressing on the display 150. Using the device as set out herein it is made possible to implement force sensing without additional pressing sensors built into the display. This will save product cost and reduce the size of the product. When in use, the electronic device 100 can both generate an audio output A1 via the audio display 150 and also receive a mechanical pressing force input F1. Any type of audio actuator can be used, such as electro-dynamic (magnet + coil) actuator, piezo-electric actuator or electro-active polymer actuator. All are originally designed to transform electrical AC signal to mechanical vibration A1, but they also work backwards transforming mechanical finger-pressing movement F1 to electrical voltage.

The received pressing force can be processed by the electronic device to detect various input signals to the electronic device as will be described below.

In Fig. 2 the electronic device 100 is seen in a cross-sectional view from the side. The electronic device 100 can have a frame 108. The display 150 can be attached to the frame 109. In accordance with some embodiments, the display 150 is attached to the frame via suspension members 108. Hereby a suspended display can be achieved. This can make the voltage signal generated by the audio actuator less sensitive to where on the display the pressing force is applied. For example, if the display is relatively small such on a smart phone, there can be large differences in the signal generated by the audio actuator depending on if a user applies a force close to the rim of the display or if the force is applied in the middle of the display. By suspending the display 150 in the frame 109, a more linear movement of the display in response to a pressing force can be achieved.

In accordance with some embodiments multiple, i.e. at least two, audio actuators are provided. By providing multiple audio actuators, it is made possible to use the different output signals from the different audio actuators to determine where on the display the pressing force is applied. Depending on the number of audio actuators provided it can become possible to determine the location on the pressing force with varying precision. Typically, the larger number of audio actuators used the higher precision in a determination on where the pressing force is applied can be achieved. For example, two audio actuators can be used wherein when a mobile phone is held towards the ear, only an upper-half actuator is used to create a close to ear functionality. By driving both audio actuators, a handsfree loudspeaker mode can be implemented. When having two audio actuators, can enable detection of a finger-pressing force separately for upper and lower half of display. In other implementations additional audio actuators can be provided. For example, 4 audio actuators, one of each corner of display can be used. This will also allow a more accurate force detection from a wider display area when detecting the voltage signal of several audio actuators instead of just one audio actuator.

Above, the different components such as low-pass filter and force detection unit are presented as individual blocks. In some implementations these components can be integrated in an audio actuator system configured to monitor an audio actuator displacement. This monitoring of the audio actuator displacement can use the same audio display system functionality as the audio display when the audio display comprises a system for sensing actuator displacement compared to center/rest position.

In Fig. 3, a flowchart illustrating some steps performed in an electronic device 100 when a mechanical force is applied to the display 150 connected to the audio actuator 104 is shown. First, in a step 301 a signal from the audio actuator 104 is output. Next, in a step 303, the output signal is lowpass filtered in the lowpass filter 105. The signal from the lowpass filter 105 is received by a detector 106 and the signal received by the detector is used to detect a pressing force on the display in a step 305. In accordance with some embodiments, it is determined in a step 307, a time during which a force is applied to the display based on the output signal from the lowpass filter. In accordance with some embodiments, it is determined in a step 309, a magnitude of a force applied to the display based on the output signal from the lowpass filter. By determining time and magnitude of the input signal the electronic device is enabled to differentiate between different types of input from a user. In case multiple, i.e. at least two, audio actuators are provided in the electronic device, a determination of where on the display the force is applied is performed based on the output signal from the at least two audio actuators in a step 311.

The signal detected can be used in later processing for determining an input command or some other input from a user pressing on the display 150. Using the device as set out herein it is made possible to implement force sensing without additional pressing sensors built into the display. This will save product cost and reduce the size of the product.

## Claims

1. An electronic device (100) comprising:
- a display (150) working as a membrane;
- an audio actuator (104) connected to the display (150) and wherein the audio actuator (104) is an electro-mechanical transducer configured to transform an electrical alternating current audio signal to mechanical vibration and a mechanical force applied to the display to an electrical signal, wherein the audio actuator (104) is configured to generate a voltage signal from a pressing force on the display (150);
- an audio signal generator (101) connected to the audio actuator (104), wherein the audio actuator (104) is configured to make the display (150) vibrate in accordance with an audio signal generated by the audio signal generator (101),
- a lowpass filter (105) configured to filter the voltage signal to generate an output signal by filtering out the audio signal,
and
- a force detection unit (106) connected to the lowpass filter (105), wherein the force detection unit (106) is configured to determine if a is force applied to the display (150) based on the output signal from the lowpass filter (105); and wherein
the lowpass filter (105) is configured to have a passband that is below any frequency generated by the audio generator (101) such that no signals generated by the audio signal generator (101) are comprised in the output signal.

2. The electronic device (100) according to claim 1, further comprising a frame (109) and a suspension member (108) wherein the display (150) is attached to the frame (109) via the suspension member (108).

3. The electronic device (100) according to claim 1 or 2, wherein the force detection unit (106) is further configured to determine a time during which a force is applied to the display (150) based on the output signal from the lowpass filter (105).

4. The electronic device (100) according to any one of claims 1-3, wherein the force detection unit (106) is further configured to determine a magnitude of a force applied to the display (150) based on the output signal from the lowpass filter (105).

5. The electronic device (100) according to any one of claims 1-4, wherein the electronic device is a mobile phone.

6. The electronic device (100) according to any one of claims 1-4, further comprising a tactile feedback actuator located behind the display (150).

7. The electronic device (100) according to any one of claims 1-6, wherein at least two audio actuators are provided.

8. A method of detecting a pressing force on a display (150) of an electronic device (100) comprising the steps of:
generating a voltage signal from a pressing force on the display (150) working as a membrane by an audio actuator (104), wherein the audio actuator (104) is an electro-mechanical transducer configured to transform an electrical alternating current audio signal to mechanical vibration and a mechanical force applied to the display to an electrical signal and is connected to the display (150), and
generating an audio signal by an audio signal generator (101) connected to the audio actuator (104), causing the display (150) to vibrate in accordance with the audio signal generated by the audio signal generator (101),
low pass filtering the voltage signal by the low pass filter (105) to generate an output signal by filtering out the audio signal, and
determining if a is force applied to the display (150) based on the output signal from the lowpass filter (105) by a force detection unit (106) connected to the lowpass filter (105), and wherein
the lowpass filter (105) is configured to have a passband that is below any frequency generated by the audio generator (101) such that no signals generated by the audio signal generator (101) are comprised in the output signal.

9. A computer program product comprising computer instructions that when executed on a computer causes the computer to perform a method according to claim 8.

## Patentansprüche

1. Elektronische Vorrichtung (100), die Folgendes umfasst:
- eine Anzeige (150), die als Membran fungiert;
- einen Audioaktuator (104), der mit der Anzeige (150) verbunden ist, und wobei der Audioaktuator (104) ein elektromechanischer Wandler ist, der dazu konfiguriert ist, ein elektrisches Wechselstrom-Audiosignal in eine mechanische Vibration und eine auf die Anzeige ausgeübte mechanische Kraft in ein elektrisches Signal umzuwandeln, wobei der Audioaktuator (104) dazu konfiguriert ist, aus einer Druckkraft auf die Anzeige (150) ein Spannungssignal zu erzeugen;
- einen Audiosignalgenerator (101), der mit dem Audioaktuator (104) verbunden ist, wobei der Audioaktuator (104) dazu konfiguriert ist, die Anzeige (150) entsprechend einem vom Audiosignalgenerator (101) erzeugten Audiosignal zum Vibrieren zu bringen,
- einen Tiefpassfilter (105), der dazu konfiguriert ist, das Spannungssignal zu filtern, um durch Herausfiltern des Audiosignals ein Ausgangssignal zu erzeugen,
und
- eine Kraftdetektionseinheit (106), die mit dem Tiefpassfilter (105) verbunden ist, wobei die Kraftdetektionseinheit (106) dazu konfiguriert ist, basierend auf dem Ausgangssignal des Tiefpassfilters (105) zu bestimmen, ob eine Kraft auf die Anzeige (150) ausgeübt wird; und wobei
der Tiefpassfilter (105) derart ausgestaltet ist, dass er einen unterhalb der vom Audiogenerator (101) erzeugten Frequenzen liegenden Durchlassbereich aufweist, sodass im Ausgangssignal keine vom Audiosignalgenerator (101) erzeugten Signale enthalten sind.

2. Elektronische Vorrichtung (100) nach Anspruch 1, die ferner einen Rahmen (109) und ein Aufhängungselement (108) umfasst, wobei die Anzeige (150) über das Aufhängungselement (108) am Rahmen (109) befestigt ist.

3. Elektronische Vorrichtung (100) nach Anspruch 1 oder 2, wobei die Kraftdetektionseinheit (106) ferner dazu konfiguriert ist, basierend auf dem Ausgangssignal des Tiefpassfilters (105) eine Zeit zu bestimmen, während der eine Kraft auf die Anzeige (150) ausgeübt wird.

4. Elektronische Vorrichtung (100) nach einem der Ansprüche 1-3, wobei die Kraftdetektionseinheit (106) ferner dazu konfiguriert ist, basierend auf dem Ausgangssignal des Tiefpassfilters (105) eine Stärke einer auf die Anzeige (150) ausgeübten Kraft zu bestimmen.

5. Elektronische Vorrichtung (100) nach einem der Ansprüche 1-4, wobei die elektronische Vorrichtung ein Mobiltelefon ist.

6. Elektronische Vorrichtung (100) nach einem der Ansprüche 1-4, die ferner einen hinter der Anzeige (150) befindlichen Aktuator zur taktilen Rückmeldung umfasst.

7. Elektronische Vorrichtung (100) nach einem der Ansprüche 1-6, wobei mindestens zwei Audioaktuatoren vorgesehen sind.

8. Verfahren zum Detektieren einer Druckkraft auf eine Anzeige (150) einer elektronischen Vorrichtung (100), das die folgenden Schritte umfasst:
Erzeugen eines Spannungssignals aus einer Druckkraft auf eine als Membran fungierende Anzeige (150) durch einen Audioaktuator (104), wobei der Audioaktuator (104) ein elektromechanischer Wandler ist, der dazu konfiguriert ist, ein elektrisches Wechselstrom-Audiosignal in eine mechanische Vibration und eine auf die Anzeige ausgeübte mechanische Kraft in ein elektrisches Signal umzuwandeln, und der mit der Anzeige (150) verbunden ist; und
Erzeugen eines Audiosignals durch einen mit dem Audioaktuator (104) verbundenen Audiosignalgenerator (101), wodurch die Anzeige (150) dazu gebracht wird, entsprechend dem vom Audiosignalgenerator (101) erzeugten Audiosignal zu vibrierten, Tiefpassfiltern des Spannungssignals durch den Tiefpassfilter (105), um durch Herausfiltern des Audiosignals ein Ausgangssignal zu erzeugen, und
Bestimmen basierend auf dem Ausgangssignal des Tiefpassfilters (105) durch eine mit dem Tiefpassfilter (105) verbundene Kraftdetektionseinheit (106), ob auf die Anzeige (150) eine Kraft ausgeübt wird, und wobei der Tiefpassfilter (105) derart ausgestaltet ist, dass er einen unterhalb der vom Audiogenerator (101) erzeugten Frequenzen liegenden Durchlassbereich aufweist, sodass im Ausgangssignal keine vom Audiosignalgenerator (101) erzeugten Signale enthalten sind.

9. Computerprogrammprodukt, das Computeranweisungen umfasst und das, wenn es auf einem Computer ausgeführt wird, den Computer dazu befähigt, das Verfahren nach Anspruch 8 durchzuführen.

## Revendications

1. Dispositif électronique (100) comprenant :
- un écran (150) fonctionnant comme une membrane ;
- un actionneur audio (104) connecté à l'écran (150) et dans lequel l'actionneur audio (104) est un transducteur électromécanique configuré pour transformer un signal audio à courant alternatif électrique en vibration mécanique et une force mécanique appliquée à l'écran en un signal électrique, dans lequel l'actionneur audio (104) est configuré pour générer un signal de tension à partir d'une force de pression sur l'écran (150) ;
- un générateur de signal audio (101) connecté à l'actionneur audio (104), dans lequel l'actionneur audio (104) est configuré pour faire vibrer l'écran (150) en fonction d'un signal audio généré par le générateur de signal audio (101),
- un filtre passe-bas (105) configuré pour filtrer le signal de tension afin de générer un signal de sortie en filtrant le signal audio,
et
- une unité de détection de force (106) connectée au filtre passe-bas (105), dans lequel l'unité de détection de force (106) est configurée pour déterminer si une force est appliquée à l'écran (150) sur la base du signal de sortie du filtre passe-bas (105) ; et dans lequel
le filtre passe-bas (105) est configuré pour avoir une bande passante qui est inférieure à toute fréquence générée par le générateur audio (101) de telle sorte qu'aucun signal généré par le générateur de signal audio (101) n'est compris dans le signal de sortie.

2. Dispositif électronique (100) selon la revendication 1, comprenant également un cadre (109) et un élément de suspension (108) dans lequel l'écran (150) est fixé au cadre (109) via l'élément de suspension (108).

3. Dispositif électronique (100) selon la revendication 1 ou 2, dans lequel l'unité de détection de force (106) est également configurée pour déterminer un temps pendant lequel une force est appliquée à l'écran (150) sur la base du signal de sortie du filtre passe-bas (105).

4. Dispositif électronique (100) selon l'une quelconque des revendications 1 à 3, dans lequel l'unité de détection de force (106) est également configurée pour déterminer une magnitude d'une force appliquée à l'écran (150) sur la base du signal de sortie du filtre passe-bas (105).

5. Dispositif électronique (100) selon l'une quelconque des revendications 1 à 4, dans lequel le dispositif électronique est un téléphone mobile.

6. Dispositif électronique (100) selon l'une quelconque des revendications 1 à 4, comprenant également un actionneur de rétroaction tactile situé derrière l'écran (150).

7. Dispositif électronique (100) selon l'une quelconque des revendications 1 à 6, dans lequel au moins deux actionneurs audio sont fournis.

8. Procédé de détection d'une force de pression sur un écran (150) d'un dispositif électronique (100) comprenant les étapes suivantes :
la génération d'un signal de tension provenant d'une force de pression sur l'écran (150) fonctionnant comme une membrane par l'actionneur audio (104), dans lequel l'actionneur audio (104) est un transducteur électromécanique configuré pour transformer un signal audio à courant alternatif électrique en vibration mécanique et une force mécanique appliquée à l'écran en un signal électrique, et est connecté à l'écran (150) , et
la génération d'un signal audio par un générateur de signal audio (101) connecté à l'actionneur audio (104), amenant l'écran (150) à vibrer en fonction du signal audio généré par le générateur de signal audio (101),
le filtrage passe-bas du signal de tension par le filtre passe-bas (105) pour générer un signal de sortie en filtrant le signal audio, et
le fait de déterminer si une force est appliquée à l'écran (150) sur la base du signal de sortie du filtre passe-bas (105) par une unité de détection de force (106) connectée au filtre passe-bas (105), et dans lequel le filtre passe-bas (105) est configuré pour avoir une bande passante qui est inférieure à toute fréquence générée par le générateur audio (101) de telle sorte qu'aucun signal généré par le générateur de signal audio (101) n'est compris dans le signal de sortie.

9. Produit de programme informatique comprenant des instructions informatiques qui, lorsqu'elles sont exécutées sur un ordinateur, amènent l'ordinateur à réaliser un procédé selon la revendication 8.
